# EUROPEAN PATENT SPECIFICATION

(11) **EP 1 993 266 B1**
(45) Date of publication and mention of the grant of the patent: **04.07.2012**
(21) Application number: 07009867.8
(22) Date of filing: 16.05.2007
(51) Int. Cl.: H04L 29/12, H04L 12/56

(54) **Internet protocol address discovery in cellular networks**
Internetprotokolladressen-Feststellung in zellularen Netzwerken
Découverte d'adresses de protocole Internet dans des réseaux cellulaires

(43) Date of publication of application: 19.11.2008
(73) Proprietor: Nokia Siemens Networks GmbH & Co. KG, 81541 mÜNCHEN (DE)
(72) Inventor: Eichinger, Josef Martin, 85464 Neufinsing (DE); Plyaskin, Roman, 81243 München (DE); Schulz, Egon, Dr., 80993 München (DE)
(74) Representative: Bruglachner, Thomas E.

(56) References cited:
- US-A1- 2003 216 140
- US-A1- 2004 264 476

## Description

The present invention relates to the discovery of Internet Protocol addresses of nodes in cellular networks.

During a handover phase or in other cases when a node in a cellular network wants to transmit control data and/or user data to another node via an Internet Protocol (IP) connection, it is required to know the destination IP address of that node. The source node may know a cell identifier (cell-ID) of the cell served by a node or a direct node identifier, but for establishing an IP based connection between nodes an IP address is needed. Up to now the mobile radio networks are not purely IP based, and no scheme exists allowing the discovery of IP addresses based on a cell-ID.

US 2004/026446 discloses a method in which a current access router determines the proxy of the target network. The proxy sends a DNS request for the APN to a DNS and the DNS determines the IP address of the target access router.

US 2003/0216140 discloses a handoff (handover) procedure in which a candidate cell for the mobile terminal to perform a handoff to broadcasts a cell identifier. If it is determined that one of the candidate cells can provide better signal strength and quality to the mobile terminal, a handoff to the selected candidate cell is performed. Otherwise the mobile terminal continues to receive cell identifiers and make measurements of those candidate cells.

Therefore new methods and devices are required to allow IP address discovery in cellular networks when only non-IP-related identifications of nodes are known.

### Summary of the invention

Accordingly, the invention provides a method according to claims 1 and 8, a node of a cellular network according to claim 14 and a server according to claim 19.

According to a first aspect of the present invention a method is provided for discovering an Internet Protocol (IP) address of a target node in a cellular network, said target node serving a cell of said network, the method comprising:
- determining an identification of the cell served by said target node;
- issuing a request for providing the Internet Protocol address of said node, including said cell identification; and
- obtaining a response including said Internet Protocol address.

Mobile networks are not purely IP-based as of now, therefore no means are provided to discover IP addresses of nodes in a cellular network, when only an identification of the cell served by said node is known. The method according to the invention allows discovering this IP address based on the known cell identification.

According to an exemplary embodiment issuing said request comprises including said cell identification in form of an internet domain according to the syntax of the Domain Name System.

Having the cell identification included in said request in this form allows using Domain Name System (DNS) requests and responses, or in other words handling the cell identification as if it were a standard Internet domain. In order to be able to use DNS the domain names have to be defined in a web based syntax.

According to an exemplary embodiment said internet domain comprises a top-level domain and a second-level domain, and
- said top-level domain is unique for the operator of said cellular network, and said second-level domain is an identifier unique for said node in said cellular network;
   or
- said top-level domain is a top-level domain shared by a plurality of cellular networks, and said second-level domain is an identifier unique for said node in said plurality of cellular networks.

The invention proposes two principles for using the domain name conventions for cell identifications. According to the first alternative each base station or node of an operator is associated to an IP domain, wherein each operator has his own top-level domain. For example operator A owns the IP domain xxxx.OpA, and operator B owns the IP domain yyyy.OpB. Each node has its own cell identifier (cell-ID) that is unique in the cellular network of its associated operator. Therefore each node could be identified by the global address: "cell-ID1.OpA" or "cell-ID1.OpB".

In this alternative the cell-ID is not necessarily unique in a plurality of networks (e.g. operators A/B).

According to the second alternative each node of an operator from a plurality of operators is associated to the same top-level domain (e.g. MRN, Mobile Radio Networks). Only one top-level domain exists for all or at least for a plurality of operators. For example operator A and operator B are members of the IP domain xxxx.MRN. Each node has its own cell identifier (cell-ID) that is unique for the plurality of operators (or even all operators). Therefore each base station could be identified by the global address: "cell-ID1.MRN" or "cell-ID2.MRN". In this alternative the cell-ID is has to be unique in at least the plurality of networks sharing a single top-level domain (e.g. operators A/B having the domain ".MRN").

An advantage is that it can be avoided that a lot of new top level domains have to be introduced within the world wide top level community. The cell-IDs have to be unique for all base stations, at least within this top-level domain. A registration process has to verify and ensure this.

According to an exemplary embodiment determining said cell identification comprises:
- requesting a user terminal device served by said target node to provide said cell identification; and
- receiving said cell identification from said user terminal.

The cell identification can be obtained from measurement of a mobile terminal connected with said node. This case for example applies to a handover situation, wherein the user terminal is connected with the target node and a node trying to find out the IP address of said target node, in order to send user of control data to the target node. The source node can request and receive the cell identification from the terminal.

According to an exemplary embodiment issuing said request comprises querying a local database comprising associations between cell identifications and corresponding IP addresses, and wherein obtaining said response comprises retrieving said IP address from said local database in case said local database contains a corresponding association.

According to an exemplary embodiment the method further comprises:
- receiving new associations or updates of existing associations; and
- storing said new associations or updating existing associations based on said received updates, in said local database.

According to an exemplary embodiment said storing comprises:
- storing a time-to-live value for each association; and
- deleting an entry with the lowest time-to-live value in said local database if the number of stored associations exceeds a threshold.

According to an exemplary embodiment issuing said request comprises transmitting said request to a server, and wherein obtaining said response comprises receiving said response from said server.

In case there are no corresponding associations stored in a local database, or in case a node does not have such a database at all, the request will be issued to a server in the network, for example a gateway.

According to an exemplary embodiment issuing said request comprises transmitting said request to at least one multicast address, and wherein obtaining said response comprises receiving said response from said target node.

This embodiment relates to a kind of de-centralized or self-organized scheme. The request is issued to a multicast address (or a plurality thereof), to be received by a plurality of possible target nodes. The target node then receives the request, checks the included cell identification, and in case it matches with its own identification, sends back a response indicating its IP address to the source node.

According to a second aspect of the invention a method is provided for discovery of IP addresses of nodes in cellular networks, wherein each node serves a cell of a cellular network, the method comprising:
- receiving a request for the Internet Protocol address of a target node, said request including an identification of the cell served by said node;
- determining the Internet Protocol address of said target node using said cell identification; and
- issuing a response including said Internet Protocol address.

According to an exemplary embodiment said cell identification is included in said request in form of an internet domain according to the syntax of the Domain Name System.

According to an exemplary embodiment said internet domain comprises a top-level domain and a second-level domain, and wherein
- said top-level domain is unique for the operator of said cellular network, and said second-level domain is a unique identifier for said node in said cellular network;
   or
- said top-level domain is a top-level domain shared by a plurality of cellular networks, and said second-level domain is a unique identifier for said node in said plurality of cellular networks.

According to an exemplary embodiment determining the IP address of said target node comprises:
- querying a local database comprising associations between cell identifications and corresponding Internet Protocol addresses and retrieving said Internet Protocol address from said local database in case said local database contains a corresponding association;
- forwarding said request for the Internet Protocol address of said node in case said local database does not contain a corresponding association.

According to an exemplary embodiment the method further comprises:
- evaluating the top-level domain of said cell identification;
   wherein
- said querying of and retrieving from said local database is performed in case said top-level domain corresponds to a pre-determined top-level domain;
   and
- said forwarding is performed in case said top-level domain does not correspond to said pre-determined top-level domain.

This embodiment makes use of the above mentioned convention wherein the top-level domain is unique for a particular operator/cellular network, wherein each operator is responsible only for its own domain, with respect to DNS handling. In case the top-level domain does not match the operator's domain, the request cannot be handled locally and is forwarded. In advanced embodiments it is possible to determine the target for forwarding based on the top-level domain, i.e. the server knows which domains belong to which operator/network and forwards the request accordingly.

According to an exemplary embodiment, in case said local database does not contain a corresponding association, the method further comprises:
- receiving a response including the Internet Protocol address of said target node; and
- storing said Internet Protocol address and said cell identification of said node as new association in said local database.

In this embodiment a forwarded request is answered by an external server. In order to avoid unnecessary network load and response times, the association between IP address and cell identification can be stored or cached for further requests.

According to a third aspect of the invention a computer program product is provided, comprising program instructions stored on a computer readable medium for carrying out the method described above when said program product is run on a computer.

According to a fourth aspect of the invention a node of a cellular network is provided, comprising:
- a cellular network interface adapted for serving a first cell of said cellular network;
- a controller, adapted for determining an identification of a second cell served by a target node, issuing a request for the Internet Protocol address of said node, said request including said cell identification, and obtaining a response including said Internet Protocol address.

According to an exemplary embodiment said controller is adapted for including said cell identification in said request in form of an internet domain according to the syntax of the Domain Name System.

According to an exemplary embodiment said internet domain comprises a top-level domain and a second-level domain, and wherein
- said top-level domain is unique for the operator of said cellular network, and said second-level domain is a unique identifier for said node in said cellular network;
   or
- said top-level domain is a top-level domain shared by a plurality of cellular networks, and said second-level domain is a unique identifier for said node in said plurality of cellular networks.

According to an exemplary embodiment said controller is adapted for performing said determining of an identification of the cell by requesting a user terminal device served by said target node to provide said cell identification, and for receiving said cell identification from said user terminal.

According to an exemplary embodiment the device further comprises:
- a local database comprising associations between cell identifications and corresponding Internet Protocol addresses;
and wherein said controller is adapted for performing said issuing of said request by querying said local database and obtaining said response by retrieving said Internet Protocol address from said local database in case said local database contains a corresponding association.

According to an exemplary embodiment said controller is adapted for receiving new associations or updates of existing associations, and storing said new associations or updating existing associations based on said received updates, in said local database.

According to an exemplary embodiment said controller is adapted for storing a time-to-live value for each association, and for deleting an entry with the lowest time-to-live value in said local database if the number of stored associations exceeds a threshold.

According to a fifth aspect of the invention a server in a cellular network is provided, comprising:
- a network interface adapted for connecting to nodes of said cellular network; and
- a controller adapted for receiving a request from a node of said cellular network for the Internet Protocol address of a target node, said request including an identification of the cell served by said node, for determining the Internet Protocol address of said target node using said cell identification, and for issuing a response including said Internet Protocol address to said requesting node.

According to an exemplary embodiment said cell identification is included in said request in form of an internet domain according to the syntax of the Domain Name System.

According to an exemplary embodiment said internet domain comprises a top-level domain and a second-level domain, and wherein
- said top-level domain is unique for the operator of said cellular network, and said second-level domain is a unique identifier for said node in said cellular network;
   or
- said top-level domain is a top-level domain shared by a plurality of cellular networks, and said second-level domain is a unique identifier for said node in said plurality of cellular networks.

According to an exemplary embodiment the device further comprises:
- a local database comprising associations between cell identifications and corresponding Internet Protocol addresses;
and wherein said controller is adapted for performing said issuing of said request by querying said local database and obtaining said response by retrieving said Internet Protocol address from said local database in case said local database contains a corresponding association.

According to an exemplary embodiment said controller is adapted for evaluating the top-level domain of said cell identification, for performing said querying of and retrieving from said local database in case said top-level domain corresponds to a pre-determined top-level domain, and for performing said forwarding in case said top-level domain does not correspond to said pre-determined top-level domain.

According to an exemplary embodiment said controller is adapted for receiving a response including the Internet Protocol address of said target node, in case said local database does not contain a corresponding association, and for storing said Internet Protocol address and said cell identification of said node as new association in said local database.

According to another aspect of the invention a system is provided, comprising at least one server and at least one node as described above.

### Brief description of the drawings

The invention can be more fully understood by the following detailed description of exemplary embodiments, when also referring to the drawings, which are provided in an exemplary manner only and are not intended to limit the invention to any particular embodiment illustrated therein. In the drawings
Fig. 1 illustrates a prior art situation in a cellular network;
Fig. 2 is a flow diagram of an embodiment of the invention;
Fig. 3 is a schematic view of an embodiment of the invention;
Fig. 4 is a schematic view of another embodiment of the invention;
Fig. 5 is a schematic view of yet another embodiment of the invention;
Fig. 6 is a flow diagram of an embodiment of the invention process for an authoritative server;
Fig. 7 is a flow diagram of an embodiment of the invention process for a non-authoritative server;
Fig. 8 is a schematic view of still another embodiment of the invention;
Fig. 9 is a schematic view of a further embodiment of the invention;
Fig. 10 is a schematic illustration of a domain name convention according to the invention; and
Fig. 11 is a flow diagram of an embodiment of the invention.

### Detailed description of the invention

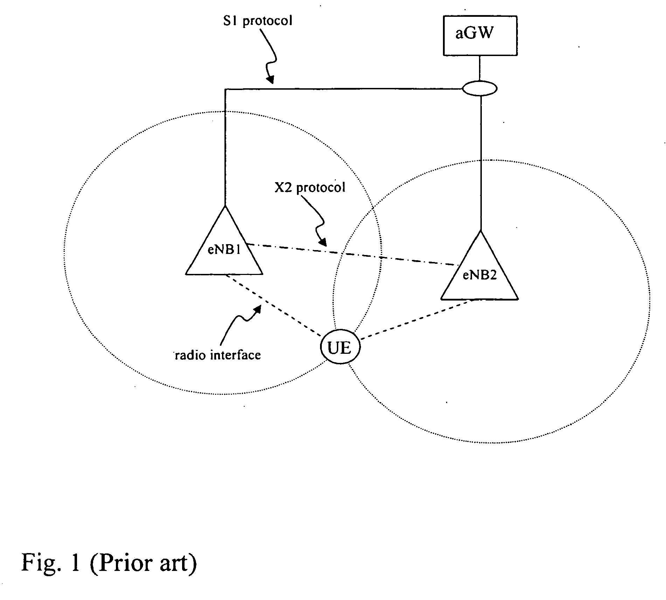

During a handover phase or in other cases when a node in a cellular network wants to transmit control data and/or user data to another node via an Internet Protocol connection, it is required to know the destination IP address of that node. This situation is depicted in fig. 1. The system comprises two nodes eNB1 and eNB2, which are in turn connected to a gateway aGW over a wired interface S1. Furthermore a user terminal UE is in connection with (in the coverage area of, indicated by the dotted circles) the two nodes, via a radio interface. It is assumed that the node currently serving the user terminal UE is eNB1 and that a handover to eNB2 is to take place.

The source node eNB1 now wants to transmit control data and/or user data to eNB2, using an IP connection X2. The source node may know a cell identifier (cell-ID) of the cell served by eNB2 or a direct node identifier, for example derived from measurements of a user terminal being connected with the source and the target node, but for establishing an IP based connection between nodes an IP address is needed. The prior art does not provide any means for discovering the IP address of node eNB2 when only knowing a cell identification thereof.

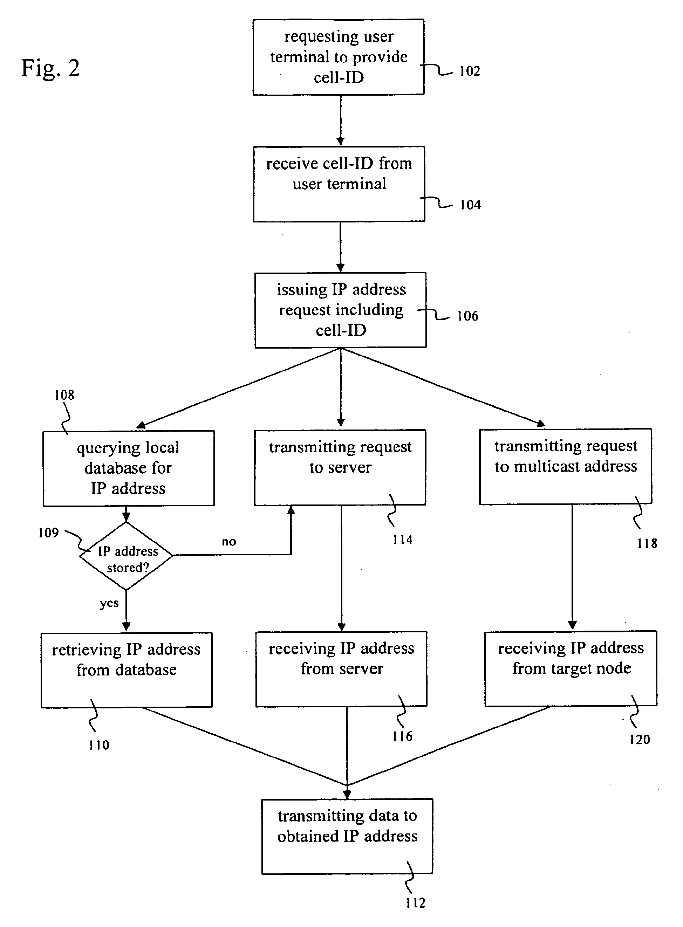

Fig. 2 is a flow diagram of an embodiment of the method of the invention, for example to be performed in a situation as depicted in fig. 1. In step 102 a user terminal is requested to provide a cell-ID of a target node to which data (user and/or control data) are to be transmitted via an IP-based protocol. A corresponding response including the cell-ID is received in step 104 from the user terminal. It is to be noted that this is just an example embodiment; in other embodiments of the invention the required cell-ID can be determined by other means.

In step 106 a request for the IP address of the target node is issued. According to different embodiments there are three alternatives depicted here. In the first alternative, in step 108 a local database is queried for the IP address, using the cell identification. In case an association for the cell identification is contained (which is checked in step 109), the corresponding IP address is retrieved from the database in step 110. Otherwise, i.e. in case it is found that no association for the cell identification is contained in the database, in step 109, the process continues with step 114.

In the alternative starting with step 114 (which can be an addition instead of an alternative in case of a negative determination in step 109) a request for the IP address is transmitted to an external server, for example a gateway in the cellular network in question. In step 116 a response including the requested IP address is received from the server.

In the third alternative the request is transmitted to a multicast address (or a plurality thereof), in step 118. In this figure it is assumed that from all nodes listening on that multicast address(es) only the target node transmits a response indicating its IP address. In principle also other nodes knowing the IP address of the target node can provide this answer. In either alternative the process is continued by establishing an IP connection with the target node, using the received IP address, and transmitting (control and/or user) data to this node.

Three exemplary embodiments for discovering IP addresses according to the invention shall be explained in detail now.

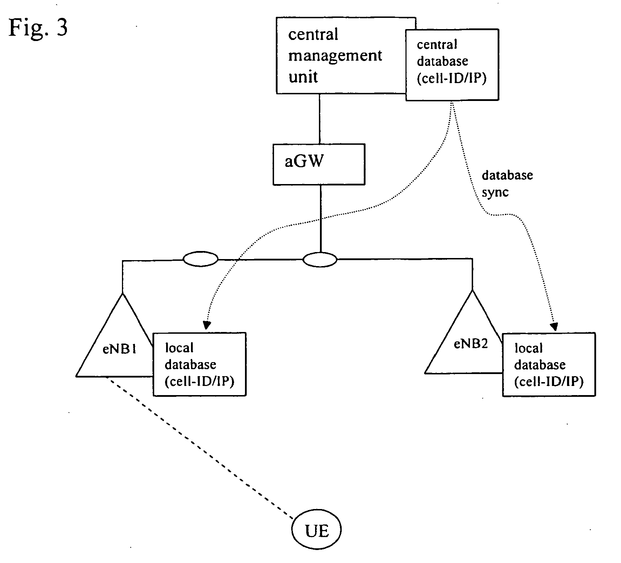

According to a first embodiment local look-up tables in the nodes are employed. This corresponds to steps 108, 109 and 110 in fig. 2. These tables are locally stored text files or databases containing mappings between cell ID's and IP addresses. The databases can be loaded from a remote control center or Operation and Maintenance (O&M) center periodically or on demand. This first alternative is depicted in fig. 3

This solution is based on an arrangement wherein each node has a local database that contains cell ID's, e.g. of all neighboring nodes including the "umbrella cells" and IP addresses associated to them. This database can be updated with a defined period (e.g. once an hour or a day), e.g. by a central management unit which has a full information about the structure of the mobile network. During an installation phase of the mobile network this information needs to be input into the central unit, and afterwards downloading the database with neighbor information for each node is performed. When a new node is added, the central management unit must update databases of all surrounding base stations.

The central database can be setup by
- Central administration during network setup or maintenance.
- Periodically polling the IP and cell-ID of the nodes inside the aGW-domain by the data base manager which is part of the O&M or the aGW.
- DHCP-based IP access and registration of the nodes at the central data base. If an additional node is introduced into the network it requests an IP address via DHCP. If an IP address is assigned to the node it also gets a cell-ID (and other configuration parameters) from the DHCP server located at the aGW and therefore it is already registered in the central data base.

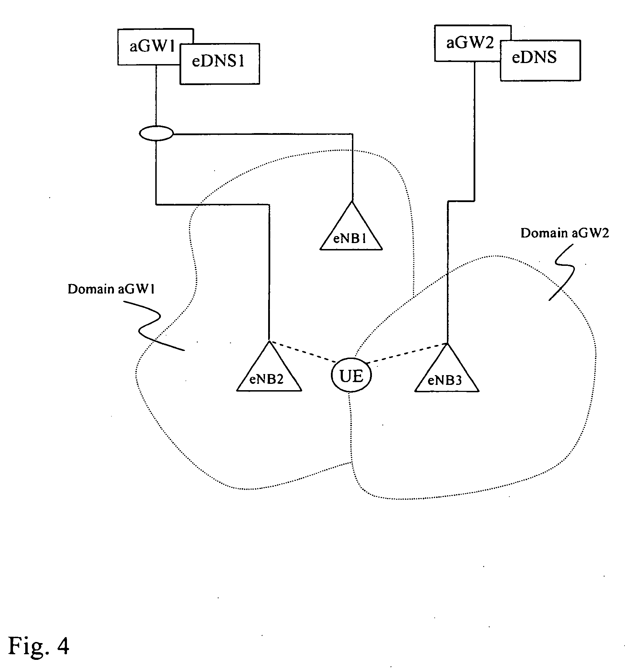

A second alternative embodiment involves discovering IP addresses in a centralized way, which is depicted in fig. 4. IP discovery in this embodiment is achieved by means of an eDNS (evolved Domain Name Server) located e.g. at a gateway (aGW), using a so-called eNRP protocol (evolved Name Resolution Protocol). Each node that cannot resolve an IP address request including a given cell-ID sends a request to an eDNS and receives a response with the corresponding address.

The eNRP (evolved Name Resolution Protocol) protocol according to the invention uses a client-server architecture. Clients make requests and the server is responsible to find a requested IP address, either in its database or in other databases. When an eNRP service is implemented, an eNRP client is installed in a node and an eNRP server is installed in an aGW or O&M node. The eNRP Server is based on a modified DNS server (Domain Name Server).

If an eNB belongs to a domain of a gateway, the gateway or the network behind it should contain a DNS-like server called an eDNS which contains cell-ID/IP address entries in its database and the gateway is called authoritative for that eNB. Correspondingly, if an eNB doesn't belong to the gateway domain, there is no record in the eDNS database in that aGW, then this gateway is called not authoritative for that eNB.

In figure 4 two base stations or nodes, respectively, are located within a first area are in the domain of aGW1/eDNSI and one base station in a second area is in the domain of aGW2/eDNS2. So aGW1 is not authoritative for eNB3 and aGW2 is not authoritative for eNB1 and eNB2.

If a mobile user terminal UE moves within one domain, the source eNB will get the target IP address by requesting eDNS1, because the target eNB is within its domain. But if the user terminal crosses a border of two domains, the target IP address is not known to the eDNS. In that case, after receiving a request from the source eNB, the eDNS server in aGW is now responsible to find the IP address of the target eNB which it doesn't know yet.

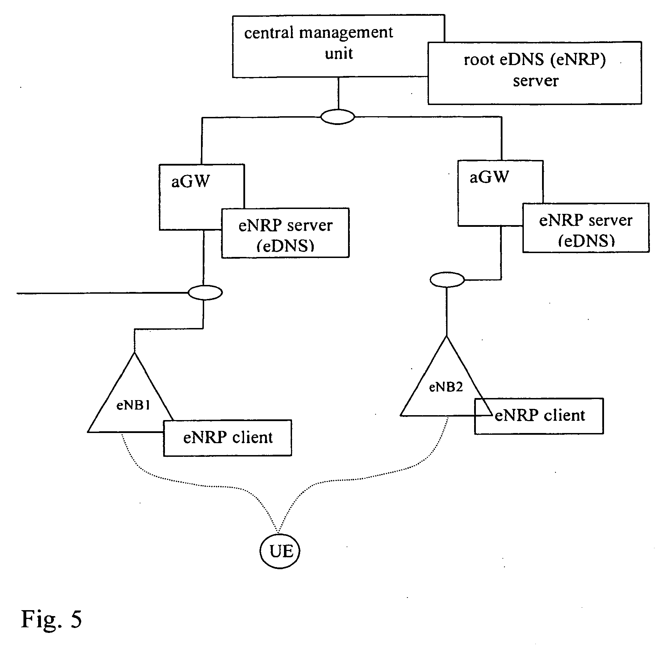

An implementation of this eNRP service is shown in fig. 5. Apart from the eNRP clients and servers there is a root eNRP server in this arrangement. A root server is used in cases when a non-authoritative eNRP server trying to get an IP address needs to communicate with others. It asks the root eNRP server for IP addresses of neighboring eNRP servers and sends to them an IP address request of the target eNB it is interested in.

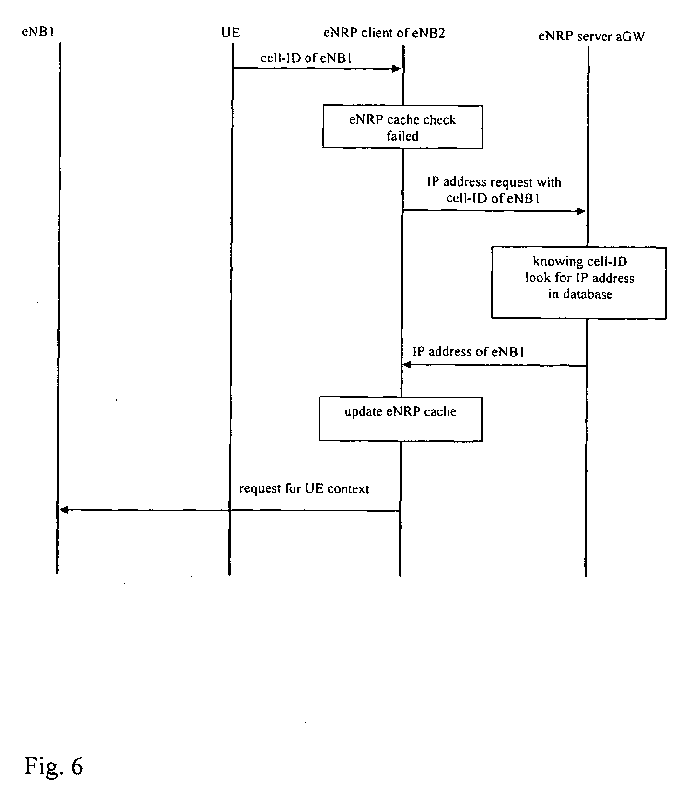

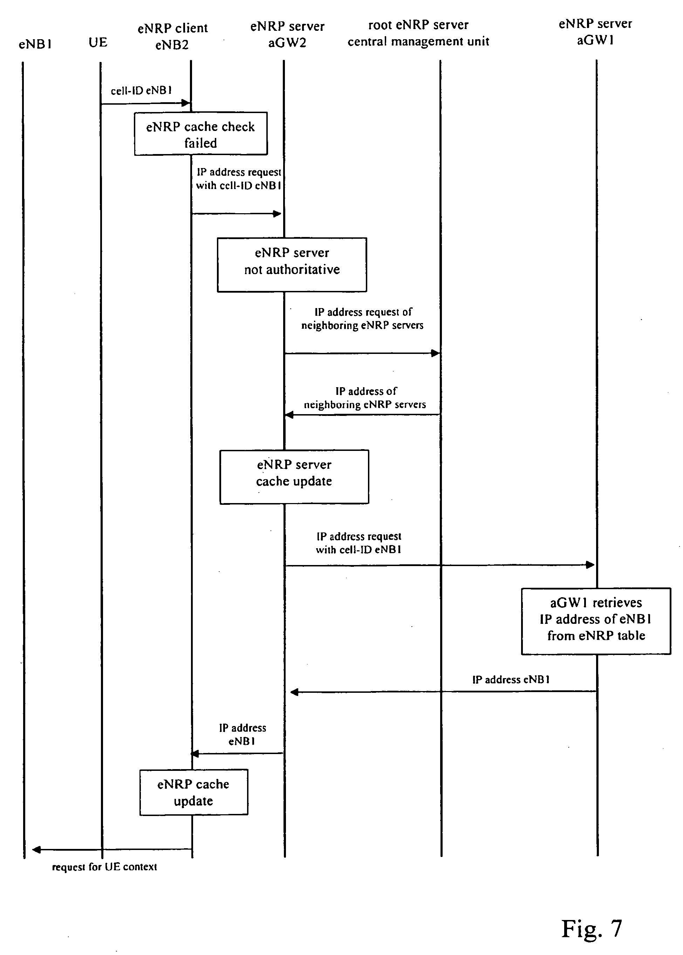

An example of the sequence to be performed by the arrangement in fig. 5 can be described as follows, with reference to figs. 6 and 7:
It is assumed here that a user terminal UE is connected with eNB2, and the IP address of a node eNB1 should be discovered. The UE provides the cell-ID of eNB1 to eNB2. The eNRP client in eNB2 checks its cache or database, which fails because eNB2 does not know the IP address for the cell-ID of eNB1. Therefore eNB2 which sends a corresponding IP address request to the eNRP server at aGW, including the cell-ID.

The eNRP server on aGW can be either authoritative or not authoritative for this cell-ID. If it is authoritative (see fig. 6) it contains a record with the required cell-ID / IP address mapping and sends it back to eNB2. At eNB2 the cache is updated with the newly received cell-ID/IP address association.

If eNRP server on aGW2 is not authoritative (eNB with requested cell-ID belongs to another aGW domain), it asks a root eNRP server and central management unit for IP addresses of the surrounding eNRP servers (see fig. 7). Afterwards it consequently requests neighboring eNRP servers for the IP address of the needed eNB. One of the eNRP's will respond (in this case that at aGW1). The IP address of eNB1 is transmitted to aGW2. In this case the root eNRP acts as a resolver of aGW IP addresses. Otherwise the process is similar to fig. 6.

An advantage of using such an eNRP System is a good scalability. From an implementation point of view a default DNS implementation could be used for an eNRP server. This DNS can run either on an independent node connected to the same subnet as the aGW, or this DNS can be also run on the same platform as the GW functionalities.

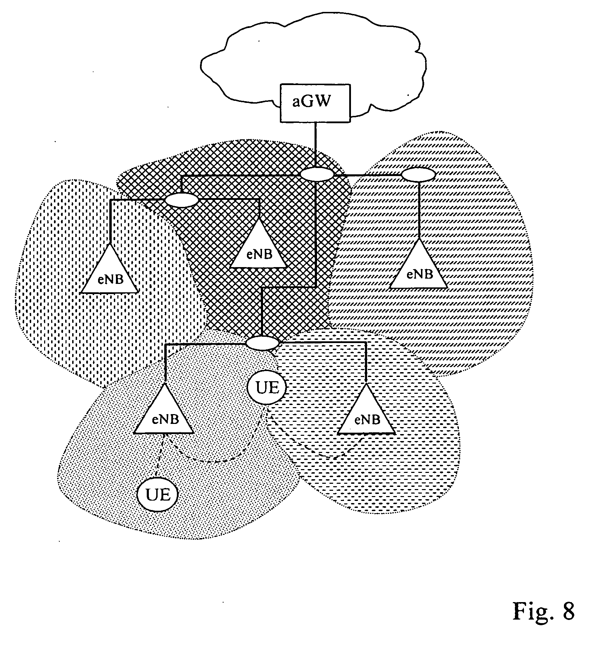

The third alternative exemplary embodiment involves performing the IP discovery in a self-organized manner, using a so-called eNDP (evolved Network Discovery Protocol). This embodiment is depicted in fig. 8. In that case eNB's do not need a gateway and try to find out the necessary IP address by interacting with each other.

The proposed eNDP protocol for self-organized mobile networks is based on IP multicast. This proposal makes use of hierarchical IP discovery protocol for a mobile radio system which is also called eNDP and assumes:
- Plug-and-play functionality of an eNB.
- Very low mobility of an eNB.

One of the mayor challenges of a new mobile radio access network with flat architecture and self-organizations like plug-and-play base stations is to react as fast as possible and to reorganize the communication flows on demand. Due to the fact that the network shown in fig. 8 is based on IP protocol a suitable IP address resolution is required.

As depicted in fig. 8 a lot of base stations (e.g. NodeB`s, eNB) are connected over an IP-based transport network. The network is running in a self-organized network mode. In this case the eNBs are connected in a meshed manner, e.g. via cable-based or fiber-based networks. But this proposal is also working if the eNB is connected via air interface to other eNBs in the manner of wireless base stations or multi hop nodes.

All eNB's are organized in groups and each group has an assigned multicast address. When a mobile terminal UE moves within a group (indicated by the dashed lines) and a handover is to be done, eNB can discover a target IP address by sending a multicast request in its group with an included cell-ID of the target node. The target eNB that has this cell-ID responds with its IP address. Afterwards source and target eNB update their eNDP caches in order not to make unnecessary IP discovery in the future. The cache entries can have time to live (TTL) parameter. If it TTL is expired, the corresponding element in the cache is deleted and the mechanism is repeated once again. By introducing time to live it is assumed that the network architecture can change in the near future and IP/cell-ID mappings will get invalid. Depending on the setup of the eNB the eNDP cache is updated more or less regularly. An eNRP cache can be used as an eNDP cache because in general they are very similar.

If a mobile user terminal is moving from a first multicast group 1 to a second multicast group 2, the target eNB in group 2 must be able to receive multicast messages from the source eNB in group 1. At the same time, the source eNB can become the target eNB, and the target eNB can become the source eNB, if the user is moving from group 2 to group 1. Hence, if an eNB is located at the border of a group, it should have not only a multicast address of its group, but also multicast addresses of all neighboring groups.

In an example there are six groups of eNB's. Each one has its own multicast address. Every base station within a group has a group multicast address that is common for all members of the group. Base stations that are located at the interface between groups do additionally have multicast addresses of two or more neighboring groups. Multicast groups can have different sizes. The larger the groups are, the less is the share of border eNB's and hence the less are unnecessary multicasts into neighboring groups.

Within the eNDP cache (database) each eNB is registered with its typical identifier. This list contains the following information:
- IP address (V4 or/and V6) (mandatory)
- Cell-ID (mandatory)
- Sector-ID's (a list of supported sectors and their ID's) (optional)
- Tracking Area (optional)

In the following an exemplary sequence in order to get an IP address will be explained. Depending on the network operator, the network can be running in a centralized or self-organized mode. If a communication between eNB's is required, e.g. during a handover HO, exchange of RRM information etc., at first an IP address discovery has to be started:
1. Search within the local address data base eNDP (evolved Network Discovery Protocol) or eNRP (evolved Name Resolution Protocol) cache
   - if an entry is there -> use it
   - if no information about the target eNB could be found -> goto next step
2. Check status of the network
   - if the eNB already had a connection to the GW -> centralized infrastructure mode -> run eNRP mechanism.
   - if there is no GW available -> run eNDP mechanism.
3. eNRP mechanism (ask aGW or DNS server)
   - eNB sends a request for the IP address of a node with known cell-ID
   - aGW responds with the actual registration of the target eNB, updates the local cache
   - eNB stores the new knowledge within the local cache (update)
4. eNDP mechanism (ask network nodes) for self organizing networks
   - eNB multicast an IP packet with the question about the IP address of a known cell ID (e.g. a Network Discovery Protocol, NDP, or ARP (address resolution protocol) as already known in the IP world)
   - the target eNB responds with the cell-ID and IP address thereof
   - eNB on both sides update their local cache.

The eNB can also analyze the IP address requests of neighbor eNB's and update its local cache with the IP addresses and cell-IDs.

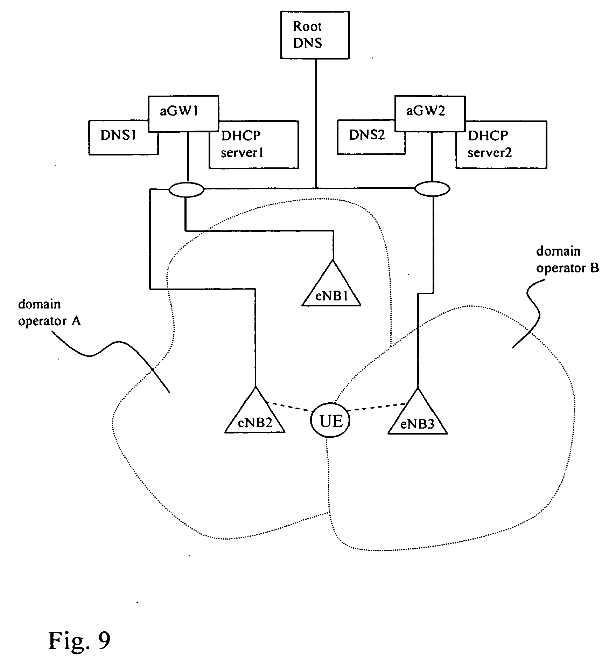

Another example of the architecture for an IP based mobile radio network is shown in fig. 9. A scenario with two operators is shown. Each base station is connected to a gateway (aGW1 or aGW2). A Domain Name System (DNS1, DNS2) server and a Dynamic Host Configuration Protocol (DHCP server1, DHCP server2) server are co-located to the gateway (aGW1 or aGW2) or are part of it. DNS1, DHCP1 and the aGW1 are part of the network of the operator A. DNS2, aGW2 and the DHCP2 are part of the network of the Operator B.

If a base station is switched on, e.g. for the first time, it requests an IP address from the DHCP server. Together with the IP address additional information is transmitted to the base station. One of the additional parameters could be the cell-ID of the base station or the sector-IDs. Generally all parameters which are relevant for a normal operation are provided by the DHCP mechanism. It is proposed to use the same protocols for the DHCP request and DHCP response as they are defined in the Internet Engineering Task Force (IETF), with the difference that the database contains additional mobile radio specific entries. In order to have the same entries in all databases the DNS and DHCP servers have access to the same database.

Besides the above described DHCP mechanism the invention also suggests using DNS principles for the IP address discovery. In existing IP networks several methods are proposed and used to resolve host names. When sending a request to a web server, a user doesn't need to know a somehow "cryptic" IP address. Instead, some kind of notation or a literal name like www.siemens.com is used, not bothering the user to remember digits. This is helpful also when a web server is moved from one host to another and the corresponding IP address has changed.

In order to be able to use DNS requests and responses according to the present invention the domain names to be used have to be defined in a web-based syntax. According to the invention the cell-ID's of nodes in a cellular network are used to form the required domain names. Two different embodiments for the domain name convention will be explained.

According to a first embodiment of the domain name convention each base station or node of an operator is associated to an IP domain, wherein each operator has his own domain. For example:
Operator A owns the IP domain xxxx.OpA, Operator B owns the IP domain yyyy.OpB.
Each base station has its own cell identifier (cell-ID). Therefore each base station can be identified by the global address: "cell-ID1.OpA" or "cell-ID1.OpB", wherein the top-level domain is OpA or OpB, and the second-level domain is the cell-ID. In this scenario the cell-ID is not unique, i.e. it is only unique within the domain of its operator's network. The cell-ID can be more or less an ASCII string which can be parsed by the DNS.

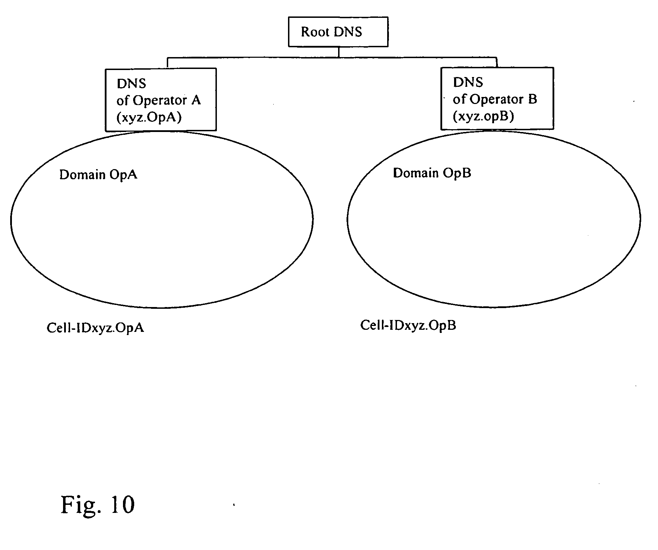

The IP address resolution scheme for this proposed domain name convention can be performed as follows (see fig. 10). At first the DNS of a specific operator (for example operator A) will extract his own top level domain name (xxxx.OpA). If the top level domain name is not equal to the operator domain the request is forwarded to the "root DNS". The root DNS redirects the request to the specific DNS of the target operator (in the example operator B).

In the second step the DNS of the operator A analyzes the domain name. The domain name is identical with the cell-ID of a specific base station and associated to a well known IP address. Finally the DNS sends the IP address back to the requesting base station. The advantage of this embodiment is that the operator is responsible for his own DNS data base. The operators are separated by the top-level domain name.

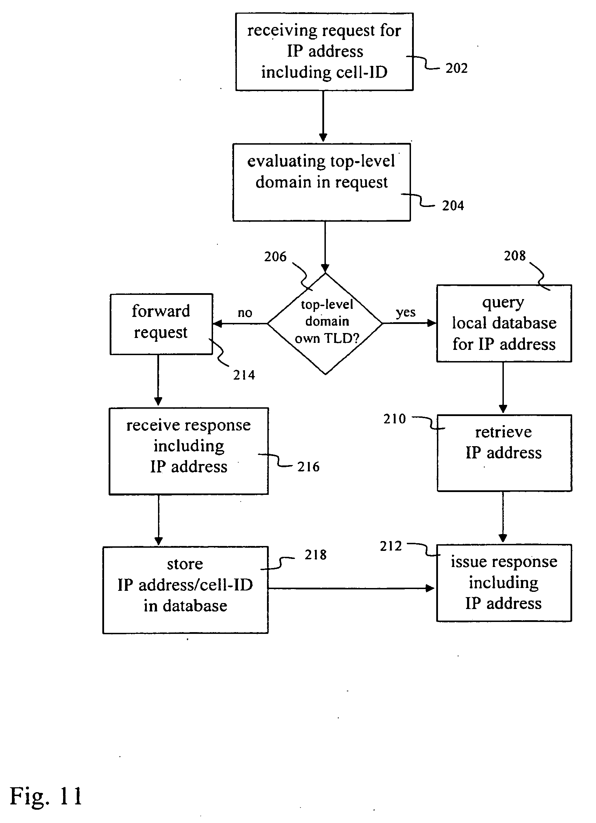

A process similar to this is illustrated in fig. 11. In step 202 a request is received for an IP address of a target node, including the cell-ID of the target node. In step 204 the top-level domain part of the cell identification in the request is examined. If, in step 206, the top-level domain TLD corresponds to the pre-determined top-level domain of the current operator/cellular network, a local database is queried in step 208. The IP address corresponding to the cell-ID is retrieved from the database in step 210. Finally, a response including the found IP address is issued, e.g. transmitted back to the requesting node. It is to be noted that this process can also be performed in a server that has been forwarded the request. In this case the response will be issued to the requesting server.

If in step 206 it is determined that the top-level domain belongs to another network/operator, the request is forwarded in step 214, e.g. to a server in another network or even the target network, if the latter is known. From this server (or another server that has in turn been forwarded the request) a response is received in step 216, including the requested IP address. In step 218 the local database is updated with the newly found IP address/cell-ID association, in order to cache the IP address for later requests. The process is again continued with step 212, by issuing a response including the IP address to the requesting entity, e.g. node.

According to a second embodiment of the domain name convention each base station of an operator is associated to a single top level domain, wherein only one top-level domain exists for a plurality of operators. For example:
Operator A and operator B are members of the IP domain xxxx.MRN (Mobile Radio Networks). The top-level domain name MRN is only an example in order to illustrate the principle. Each base station has its own unique cell identifier (cell-ID). Therefore each base station can be identified by the global address: "cell-ID1.MRN" or "cell-ID2.MRN". In this scenario the cell-ID is unique at least for the networks of the plurality of operators sharing the top-level domain "MRN". The advantage of this embodiment is that not a lot of new top-level domains have to be introduced within the world wide top level community.

## Claims

1. Method for discovering an Internet Protocol address of a target node in a cellular network, said target node serving a cell of said network, the method comprising:
- determining an identification of the cell served by said target node;
- issuing a request for providing the Internet Protocol address of said node, including said cell identification; and
- obtaining a response including said Internet Protocol address,
wherein issuing said request comprises querying a local database comprising associations between cell identifications and corresponding Internet Protocol addresses, and obtaining said response comprises retrieving said Internet Protocol address from said local database in case said local database contains a corresponding association, and
wherein the method further comprises
- receiving new associations or updates of existing associations; and
- storing said new associations or updating existing associations based on said received updates, in said local database.

2. Method according to claim 1, wherein issuing said request comprises including said cell identification in form of an internet domain according to the syntax of the Domain Name System.

3. Method according to claim 2, wherein said internet domain comprises a top-level domain and a second-level domain, and wherein
- said top-level domain is unique for the operator of said cellular network, and said second-level domain is an identifier unique for said node in said cellular network;
or
- said top-level domain is a top-level domain shared by a plurality of cellular networks, and said second-level domain is an identifier unique for said node in said plurality of cellular networks.

4. Method according to anyone of the preceding claims, wherein determining said cell identification comprises:
- requesting a user terminal device served by said target node to provide said cell identification; and
- receiving said cell identification from said user terminal.

5. Method according to anyone of the preceding claims, wherein said storing comprises:
- storing a time-to-live value for each association; and
- deleting an entry with the lowest time-to-live value in said local database if the number of stored associations exceeds a threshold.

6. Method according to anyone of the preceding claims, wherein issuing said request comprises transmitting said request to a server, and wherein obtaining said response comprises receiving said response from said server.

7. Method according to anyone of the preceding claims, wherein issuing said request comprises transmitting said request to at least one multicast address, and wherein obtaining said response comprises receiving said response from said target node.

8. Method for discovery of Internet Protocol addresses of nodes in cellular networks, wherein each node serves a cell of a cellular network, the method comprising:
- receiving a request for the Internet Protocol address of a target node, said request including an identification of the cell served by said node;
- determining the Internet Protocol address of said target node using said cell identification; and
- issuing a response including said Internet Protocol address,
wherein said determining comprises querying a local database comprising associations between cell identifications and corresponding Internet Protocol addresses, and issuing said response comprises retrieving said Internet Protocol address from said local database in case said local database contains a corresponding association, and
wherein the method further comprises
- receiving a response including the Internet Protocol address of said target node; and
- storing said Internet Protocol address and said cell identification of said node as new association in said local database in case said local database does not contain a corresponding association.

9. Method according to claim 8, wherein said cell identification is included in said request in form of an internet domain according to the syntax of the Domain Name System.

10. Method according to claim 9, wherein said internet domain comprises a top-level domain and a second-level domain, and wherein
- said top-level domain is unique for the operator of said cellular network, and said second-level domain is a unique identifier for said node in said cellular network;
or
- said top-level domain is a top-level domain shared by a plurality of cellular networks, and said second-level domain is a unique identifier for said node in said plurality of cellular networks.

11. Method according to claim 10, further comprising:
- evaluating the top-level domain of said cell identification;
wherein
- said querying of and retrieving from said local database is performed in case said top-level domain corresponds to a pre-determined top-level domain;
and
- said forwarding is performed in case said top-level domain does not correspond to said pre-determined top-level domain.

12. Method according to anyone of claims 8 to 11, wherein said request for the Internet Protocol address of said target node is received at a multicast address at a node, and wherein said determining step comprises checking if said included cell identification matches the cell identification of said node.

13. Computer program product comprising program instructions stored on a computer readable medium for carrying out the method of anyone of claims 1 to 12 when said program product is run on a computer.

14. Node of a cellular network, comprising:
- a cellular network interface adapted for serving a first cell of said cellular network;
- a controller, adapted for determining an identification of a second cell served by a target node, issuing a request for the Internet Protocol address of said node, said request including said cell identification, and obtaining a response including said Internet Protocol address; and
- a local database comprising associations between cell identifications and corresponding Internet Protocol addresses,
wherein said controller is adapted for performing said issuing of said request by querying said local database and obtaining said response by retrieving said Internet Protocol address from said local database in case said local database contains a corresponding association, and wherein said controller is adapted for receiving new associations or updates of existing associations, and storing said new associations or updating existing associations based on said received updates, in said local database.

15. The node according to claim 14, wherein said controller is adapted for including said cell identification in said request in form of an internet domain according to the syntax of the Domain Name System.

16. The node according to claim 15, wherein said internet domain comprises a top-level domain and a second-level domain, and wherein
- said top-level domain is unique for the operator of said cellular network, and said second-level domain is a unique identifier for said node in said cellular network;
or
- said top-level domain is a top-level domain shared by a plurality of cellular networks, and said second-level domain is a unique identifier for said node in said plurality of cellular networks.

17. The node according to anyone of claims 14 to 16, wherein said controller is adapted for performing said determining of an identification of the cell by requesting a user terminal device served by said target node to provide said cell identification, and for receiving said cell identification from said user terminal.

18. The node according to anyone of claims 14 to 17, wherein said controller is adapted for storing a time-to-live value for each association, and for deleting an entry with the lowest time-to-live value in said local database if the number of stored associations exceeds a threshold.

19. Server in a cellular network, comprising:
- a network interface adapted for connecting to nodes of said cellular network;
- a controller adapted for receiving a request from a node of said cellular network for the Internet Protocol address of a target node, said request including an identification of the cell served by said node, for determining the Internet Protocol address of said target node using said cell identification, and for issuing a response including said Internet Protocol address to said requesting node; and
- a local database comprising associations between cell identifications and corresponding Internet Protocol addresses,
wherein said controller is adapted for performing said issuing of said request by querying said local database and obtaining said response by retrieving said Internet Protocol address from said local database in case said local database contains a corresponding association, and wherein said controller is adapted for receiving a response including the Internet Protocol address of said target node, in case said local database does not contain a corresponding association, and for storing said Internet Protocol address and said cell identification of said node as new association in said local database.

20. The server according to claim 19, wherein said cell identification is included in said request in form of an internet domain according to the syntax of the Domain Name System.

21. The server according to claim 20, wherein said internet domain comprises a top-level domain and a second-level domain, and wherein
- said top-level domain is unique for the operator of said cellular network, and said second-level domain is a unique identifier for said node in said cellular network;
or
- said top-level domain is a top-level domain shared by a plurality of cellular networks, and said second-level domain is a unique identifier for said node in said plurality of cellular networks.

22. The server according to claim 21, wherein said controller is adapted for evaluating the top-level domain of said cell identification, for performing said querying of and retrieving from said local database in case said top-level domain corresponds to a pre-determined top-level domain, and for performing said forwarding in case said top-level domain does not correspond to said pre-determined top-level domain.

## Patentansprüche

1. Verfahren zum Entdecken einer Internet-Protokoll-Adresse eines Zielknotens in einem zellularen Netz, wobei der Zielknoten eine Zelle des Netzes versorgt, wobei das Verfahren Folgendes umfasst:
- Bestimmen einer Identifikation der durch den Zielknoten versorgten Zelle;
- Ausgeben einer Anforderung zum Bereitstellen der Internet-Protokoll-Adresse des Knotens, die die Zellenidentifikation umfasst; und
- Erhalten einer Antwort, die die Internet-Protokoll-Adresse umfasst,
wobei das Ausgeben der Anforderung das Abfragen einer lokalen Datenbank umfasst, die Assoziationen zwischen Zellenidentifikationen und entsprechenden Internet-Protokoll-Adressen umfasst, und das Erhalten der Antwort das Abrufen des Internet-Protokoll-Adresse aus der lokalen Datenbank umfasst, falls die lokale Datenbank einen entsprechende Assoziation enthält, und
wobei das Verfahren ferner Folgendes umfasst:
- Empfangen von neuen Assoziationen oder Aktualisierungen von existierenden Assoziationen; und
- Speichern der neuen Assoziationen oder Aktualisieren von existierenden Assoziationen auf der Basis der empfangenen Aktualisierungen in der lokalen Datenbank.

2. Verfahren nach Anspruch 1, wobei das Ausgeben der Anforderung das Einschließen der Zellenidentifikation in Form einer Internet-Domäne gemäß der Syntax des Domänennamensystems umfasst.

3. Verfahren nach Anspruch 2, wobei die Internet-Domäne eine Top-Level-Domäne und eine Second-Level-Domäne umfasst und wobei
- die Top-Level-Domäne für den Betreiber des zellularen Netzes einzigartig ist und die Second-Level-Domäne eine für den Knoten in dem zellularen Netz einzigartige Kennung ist;
oder
- die Top-Level-Domäne eine Top-Level-Domäne ist, die sich mehrere zellulare Netze teilen und die Second-Level-Domäne eine für den Knoten in den mehreren zellularen Netzen einzigartige Kennung ist.

4. Verfahren nach einem der vorhergehenden Ansprüche, wobei das Bestimmen der Zellenidentifikation Folgendes umfasst:
- Anfordern bei einer von dem Zielknoten versorgten Benutzerendgeräteeinrichtung, Zellenidentifikation bereitzustellen; und
- Empfangen der Zellenidentifikation von dem Benutzerendgerät.

5. Verfahren nach einem der vorhergehenden Ansprüche, wobei das Speichern Folgendes umfasst:
- Speichern eines Time-to-Live-Werts für jede Assoziation; und
- Löschen eines Eintrags mit dem niedrigsten Time-to-Live-Werts in der lokalen Datenbank, wenn die Anzahl gespeicherter Assoziationen eine Schwelle übersteigt.

6. Verfahren nach einem der vorhergehenden Ansprüche, wobei das Ausgeben der Anforderung das Senden der Anforderung zu einem Server umfasst und wobei das Erhalten der Antwort das Empfangen der Antwort von dem Server umfasst.

7. Verfahren nach einem der vorhergehenden Ansprüche, wobei das Ausgeben der Anforderung das Senden der Anforderung zu mindestens einer Multicast-Adresse umfasst und wobei das Erhalten der Antwort das Empfangen der Antwort von dem Zielknoten umfasst.

8. Verfahren zur Entdeckung von Internet-Protokoll-Adressen von Knoten in zellularen Netzen, wobei jeder Knoten eine Zelle eines zellularen Netzes versorgt, wobei das Verfahren Folgendes umfasst:
- Empfangen einer Anforderung für die Internet-Protokoll-Adresse eines Zielknotens, wobei die Anforderung eine Identifikation der von dem Knoten versorgten Zelle umfasst;
- Bestimmen der Internet-Protokoll-Adresse des Zielknotens unter Verwendung der Zellenidentifikation; und
- Ausgeben einer Antwort, die die Internet-Protokoll-Adresse umfasst,
wobei das Bestimmen das Abfragen einer lokalen Datenbank umfasst, die Assoziationen zwischen Zellenidentifikationen und entsprechenden Internet-Protokoll-Adressen umfasst, und das Ausgeben der Antwort das Abrufen der Internet-Protokoll-Adresse aus der lokalen Datenbank umfasst, falls die lokale Datenbank einen entsprechende Assoziation enthält, und
wobei das Verfahren ferner Folgendes umfasst:
- Empfangen einer Antwort, die die Internet-Protokoll-Adresse des Zielknoten umfasst; und
- Speichern der Internet-Protokoll-Adresse und der Zellenidentifikation des Knotens als neue Assoziation in der lokalen Datenbank, falls die lokale Datenbank keine entsprechende Assoziation enthält.

9. Verfahren nach Anspruch 8, wobei die Zellenidentifikation in Form einer Internet-Domäne gemäß der Syntax des Domänennamensystems in der Abfrage eingeschlossen ist.

10. Verfahren nach Anspruch 9, wobei die Internet-Domäne eine Top-Level-Domäne und eine Second-Level-Domäne umfasst und wobei
- die Top-Level-Domäne für den Betreiber des zellularen Netzes einzigartig ist und die Second-Level-Domäne eine für den Knoten in dem zellularen Netz einzigartige Kennung ist;
oder
- die Top-Level-Domäne eine Top-Level-Domäne ist, die sich mehrere zellulare Netze teilen und die Second-Level-Domäne eine für den Knoten in den mehreren zellularen Netzen einzigartige Kennung ist.

11. Verfahren nach Anspruch 10, ferner umfassend:
- Evaluieren der Top-Level-Domäne der Zellenidentifikation;
wobei
- Das Abfragen und das Abrufen aus der lokalen Datenbank durchgeführt werden, falls die Top-Level-Domäne einer vorbestimmten Top-Level-Domäne entspricht;
und
- das Weiterleiten durchgeführt wird, falls die Top-Level-Domäne nicht der vorbestimmten Top-Level-Domäne entspricht.

12. Verfahren nach einem der Ansprüche 8 bis 11, wobei die Anforderung für die Internet-Protokoll-Adresse des Zielknotens an einer Multicast-Adresse an einem Knoten empfangen wird und wobei der Bestimmungsschritt umfasst zu prüfen, ob die eingeschlossene Zellenidentifikation mit der Zellenidentifikation des Knotens übereinstimmt.

13. Computerprogrammprodukt, das auf einem computerlesbaren Medium gespeicherte Programmanweisungen zum Ausführen des Verfahrens nach einem der Ansprüche 1 bis 12, wenn das Programmprodukt auf einem Computer ausgeführt wird, umfasst.

14. Knoten eines zellularen Netzes, umfassend:
- eine zellulare Netzschnittstelle, die dafür ausgelegt ist, eine erste Zelle des zellularen Netzes zu versorgen;
- eine Steuerung, die dafür ausgelegt ist, eine Identifikation einer zweiten von einem Zielknoten versorgten Zelle zu bestimmen, eine Anforderung für die Internet-Protokoll-Adresse des Knotens auszugeben, wobei die Anforderung die Zellenidentifikation umfasst, und eine Antwort, die die Internet-Protokoll-Adresse umfasst, zu erhalten; und
- eine lokale Datenbank, die Assoziationen zwischen Zellenidentifikationen und entsprechenden Internet-Protokoll-Adressen umfasst,
wobei die Steuerung dafür ausgelegt ist, das Ausgeben der Anforderung durch Abfragen der lokalen Datenbank durchzuführen und die Antwort durch Abrufen der Internet-Protokoll-Adresse aus der lokalen Datenbank zu erhalten, falls die lokale Datenbank eine entsprechende Assoziation enthält, und wobei die Steuerung dafür ausgelegt ist, neue Assoziationen oder Aktualisierungen existierender Assoziationen zu empfangen und in der lokalen Datenbank die neuen Assoziationen zu speichern oder existierende Assoziationen auf der Basis der empfangenen Aktualisierungen zu aktualisieren.

15. Knoten nach Anspruch 14, wobei die Steuerung dafür ausgelegt ist, die Zellenidentifikation in der Anforderung in Form einer Internet-Domäne gemäß der Syntax des Domänennamensystems einzuschließen.

16. Knoten nach Anspruch 15, wobei die Internet-Domäne eine Top-Level-Domäne und eine Second-Level-Domäne umfasst und wobei
- die Top-Level-Domäne für den Betreiber des zellularen Netzes einzigartig ist und die Second-Level-Domäne eine für den Knoten in dem zellularen Netz einzigartige Kennung ist;
oder
- die Top-Level-Domäne eine Top-Level-Domäne ist, die sich mehrere zellulare Netze teilen und die Second-Level-Domäne eine für den Knoten in den mehreren zellularen Netzen einzigartige Kennung ist.

17. Knoten nach einem der Ansprüche 14 bis 16, wobei die Steuerung dafür ausgelegt ist, das Bestimmen einer Identifikation der Zelle durchzuführen, indem eine durch den Zielknoten versorgte Benutzerendgeräteeinrichtung angefordert wird, die Zellenidentifikation bereitzustellen und die Zellenidentifikation von dem Benutzerendgerät zu empfangen.

18. Knoten nach einem der Ansprüche 14 bis 17, wobei die Steuerung dafür ausgelegt ist, einen Time-to-Live-Wert für jede Assoziation zu speichern und einen Eintrag mit dem niedrigsten Time-to-Live-Wert in der lokalen Datenbank zu löschen, wenn die Anzahl gespeicherter Assoziationen eine Schwelle übersteigt.

19. Server in einem zellularen Netz, umfassend:
- eine Netzschnittstelle, die dafür ausgelegt ist, mit Knoten des zellularen Netzes zu verbinden;
- eine Steuerung, die dafür ausgelegt ist, eine Anforderung von einem Knoten des zellularen Netzes für die Internet-Protokoll-Adresse des Zielknotens zu empfangen, wobei die Anforderung eine Identifikation der von dem Knoten versorgten Zelle umfasst, die Internet-Protokoll-Adresse des Zielknotens unter Verwendung der Zellenidentifikation zu bestimmen und eine Antwort, die die Internet-Protokoll-Adresse umfasst, an den anfordernden Knoten auszugeben; und
- eine lokale Datenbank, die Assoziationen zwischen Zellenidentifikationen und entsprechenden Internet-Protokoll-Adressen umfasst,
wobei die Steuerung dafür ausgelegt ist, das Ausgeben der Anforderung durch Abfragen der lokalen Datenbank und Erhalten der Antwort durch Abrufen der Internet-Protokoll-Adresse aus der lokalen Datenbank, falls die lokale Datenbank eine entsprechende Assoziation enthält, durchzuführen und wobei die Steuerung dafür ausgelegt ist, eine Antwort, die die Internet-Protokoll-Adresse des Zielknotens umfasst, zu empfangen, falls die lokale Datenbank keine entsprechende Assoziation enthält, und die Internet-Protokoll-Adresse und die Zellenidentifikation des Knotens als eine neue Assoziation in der lokalen Datenbank zu speichern.

20. Server nach Anspruch 19, wobei die Zellenidentifikation in der Anforderung in Form einer Internet-Domäne gemäß der Syntax des Domänennamensystems eingeschlossen ist.

21. Server nach Anspruch 20, wobei die Internet-Domäne eine Top-Level-Domäne und eine Second-Level-Domäne umfasst und wobei
- die Top-Level-Domäne für den Betreiber des zellularen Netzes einzigartig ist und die Second-Level-Domäne eine für den Knoten in dem zellularen Netz einzigartige Kennung ist;
oder
- die Top-Level-Domäne eine Top-Level-Domäne ist, die sich mehrere zellulare Netze teilen und die Second-Level-Domäne eine für den Knoten in den mehreren zellularen Netzen einzigartige Kennung ist.

22. Server nach Anspruch 21, wobei die Steuerung dafür ausgelegt ist, die Top-Level-Domäne der Zellenidentifikation zu evaluieren, das Abfragen und Abrufen aus der lokalen Datenbank, falls die Top-Level-Domäne einer vorbestimmten Top-Level-Domäne entspricht, durchzuführen, und das Weiterleiten durchzuführen, falls die Top-Level-Domäne nicht der vorbestimmten Top-Level-Domäne entspricht.

## Revendications

1. Procédé de découverte d'une adresse de Protocole Internet d'un noeud cible dans un réseau cellulaire, ledit noeud cible desservant une cellule dudit réseau, le procédé comprenant :
- la détermination d'une identification de la cellule desservie par ledit noeud cible ;
- l'émission d'une demande de fourniture de l'adresse de Protocole Internet dudit noeud, incluant ladite identification de cellule ; et
- l'obtention d'une réponse incluant ladite adresse de Protocole Internet,
dans lequel l'émission de ladite demande comprend une requête dans une base de données locale comprenant des associations entre des identifications de cellules et des adresses de Protocole Internet correspondantes et l'obtention de ladite réponse comprend la récupération de ladite adresse de Protocole Internet dans ladite base de données locale dans le cas où ladite base de données locale contient une association correspondante, et
dans lequel le procédé comprend en outre
- la réception de nouvelles associations ou de mises à jour d'associations existantes ; et
- le stockage desdites nouvelles associations ou la mise à jour d'associations existantes sur la base desdites mises à jour reçues, dans ladite base de données locale.

2. Procédé selon la revendication 1, dans lequel l'émission de ladite demande comprend l'inclusion de ladite identification de cellule sous la forme d'un domaine Internet conformément à la syntaxe du Système de Noms de Domaines.

3. Procédé selon la revendication 2, dans lequel ledit domaine Internet comprend un domaine de niveau supérieur et un domaine de deuxième niveau, et dans lequel
- ledit domaine de niveau supérieur est unique pour l'opérateur dudit réseau cellulaire, et ledit domaine de deuxième niveau est un identifiant unique pour ledit noeud dans ledit réseau cellulaire ;
ou
- ledit domaine de niveau supérieur est un domaine de niveau supérieur partagé par une pluralité de réseaux cellulaires, et ledit domaine de deuxième niveau est un identifiant unique pour ledit noeud dans ladite pluralité de réseaux cellulaires.

4. Procédé selon l'une quelconque des revendications précédentes, dans lequel la détermination de ladite identification de cellule comprend :
- la demande à un dispositif terminal d'utilisateur desservi par ledit noeud cible de fournir ladite identification de cellule ; et
- la réception de ladite identification de cellule dudit terminal d'utilisateur.

5. Procédé selon l'une quelconque des revendications précédentes, dans lequel ledit stockage comprend :
- le stockage d'une valeur de durée de vie pour chaque association ; et
- la suppression d'une entrée avec la valeur de durée de vie la plus basse dans ladite base de données locale si le nombre d'associations stockées excède un seuil.

6. Procédé selon l'une quelconque des revendications précédentes, dans lequel l'émission de ladite demande comprend la transmission de ladite demande à un serveur, et dans lequel l'obtention de ladite réponse comprend la réception de ladite réponse dudit serveur.

7. Procédé selon l'une quelconque des revendications précédentes, dans lequel l'émission de ladite demande comprend la transmission de ladite demande à au moins une adresse de multidiffusion, et dans lequel l'obtention de ladite réponse comprend la réception de ladite réponse dudit noeud cible.

8. Procédé de découverte d'adresses de Protocole Internet de noeuds dans des réseaux cellulaires, dans lequel chaque noeud dessert une cellule d'un réseau cellulaire, le procédé comprenant :
- la réception d'une demande de l'adresse de Protocole Internet d'un noeud cible, ladite demande incluant une identification de la cellule desservie par ledit noeud ;
- la détermination de l'adresse de Protocole Internet dudit noeud cible en utilisant ladite identification de cellule ; et
- l'émission d'une réponse incluant ladite adresse de Protocole Internet,
dans lequel ladite détermination comprend une requête dans une base de données locale comprenant des associations entre des identifications de cellules et des adresses de Protocole Internet correspondantes, et l'émission de ladite réponse comprend la récupération de ladite adresse de Protocole Internet dans ladite base de données locale dans le cas où ladite base de données locale contient une association correspondante, et
dans lequel le procédé comprend en outre
- la réception d'une réponse incluant l'adresse de Protocole Internet dudit noeud cible ; et
- le stockage de ladite adresse de Protocole Internet et de ladite identification de cellule dudit noeud comme une nouvelle association dans ladite base de données locale dans le cas où ladite base de données locale ne contient pas une association correspondante.

9. Procédé selon la revendication 8, dans lequel ladite identification de cellule est incluse dans ladite demande sous la forme d'un domaine Internet conformément à la syntaxe du Système de Noms de Domaines.

10. Procédé selon la revendication 9, dans lequel ledit domaine Internet comprend un domaine de niveau supérieur et un domaine de deuxième niveau, et dans lequel
- ledit domaine de niveau supérieur est unique pour l'opérateur dudit réseau cellulaire, et ledit domaine de deuxième niveau est un identifiant unique pour ledit noeud dans ledit réseau cellulaire ;
ou
- ledit domaine de niveau supérieur est un domaine de niveau supérieur partagé par une pluralité de réseaux cellulaires, et ledit domaine de deuxième niveau est un identifiant unique pour ledit noeud dans ladite pluralité de réseaux cellulaires.

11. Procédé selon la revendication 10, comprenant en outre :
- l'évaluation du domaine de niveau supérieur de ladite identification de cellule ; dans lequel
- lesdites requête dans et récupération de ladite base de données locale sont exécutées dans le cas où ledit domaine de niveau supérieur correspond à un domaine de niveau supérieur prédéterminé ;
et
- ledit envoi est exécuté dans le cas où ledit domaine de niveau supérieur ne correspond pas audit domaine de niveau supérieur prédéterminé.

12. Procédé selon l'une quelconque des revendications 8 à 11, dans lequel ladite demande de l'adresse de Protocole Internet dudit noeud cible est reçue à une adresse de multidiffusion au niveau d'un noeud, et dans lequel ladite étape de détermination comprend le contrôle que ladite identification de cellule incluse correspond à l'identification de cellule dudit noeud.

13. Produit de programme informatique comprenant des instructions de programme stockées sur un support lisible par un ordinateur pour mettre en oeuvre le procédé selon l'une quelconque des revendications 1 à 12 lorsque ledit produit de programme est exécuté sur un ordinateur.

14. Noeud d'un réseau cellulaire, comprenant :
- une interface de réseau cellulaire adaptée à desservir une première cellule dudit réseau cellulaire ;
- un contrôleur adapté à déterminer une identification d'une deuxième cellule desservie par un noeud cible, émettre une demande de l'adresse de Protocole Internet dudit noeud, ladite demande incluant ladite identification de cellule, et obtenir une réponse incluant ladite adresse de Protocole Internet ; et
- une base de données locale comprenant des associations entre des identifications de cellules et des adresses de Protocole Internet correspondantes,
dans lequel ledit contrôleur est adapté à exécuter ladite émission de ladite demande par une requête dans ladite base de données locale et obtenir ladite réponse en récupérant ladite adresse de Protocole Internet de ladite base de données locale dans le cas où ladite base de données locale contient une association correspondante, et dans lequel ledit contrôleur est adapté à recevoir de nouvelles associations ou des mises à jour d'associations existantes, et à stocker lesdites nouvelles associations ou la mise à jour d'associations existantes sur la base desdites mises à jour reçues, dans ladite base de données locale.

15. Noeud selon la revendication 14, dans lequel ledit contrôleur est adapté à inclure ladite identification de cellule dans ladite demande sous la forme d'un domaine Internet conformément à la syntaxe du Système de Noms de Domaines.

16. Noeud selon la revendication 15, dans lequel ledit domaine Internet comprend un domaine de niveau supérieur et un domaine de deuxième niveau, et dans lequel
- ledit domaine de niveau supérieur est unique pour l'opérateur dudit réseau cellulaire, et ledit domaine de deuxième niveau est un identifiant unique pour ledit noeud dans ledit réseau cellulaire ;
ou
- ledit domaine de niveau supérieur est un domaine de niveau supérieur partagé par une pluralité de réseaux cellulaires, et ledit domaine de deuxième niveau est un identifiant unique pour ledit noeud dans ladite pluralité de réseaux cellulaires.

17. Noeud selon l'une quelconque des revendications 14 à 16, dans lequel ledit contrôleur est adapté à exécuter ladite détermination d'une identification de la cellule en demandant à un dispositif terminal d'utilisateur desservi par ledit noeud cible de fournir ladite identification de cellule, et à recevoir ladite identification de cellule dudit terminal d'utilisateur.

18. Noeud selon l'une quelconque des revendications 14 à 17, dans lequel ledit contrôleur est adapté à stocker une valeur de durée de vie pour chaque association, et à supprimer une entrée avec la valeur de durée de vie la plus basse dans ladite base de données locale si le nombre d'associations stockées excède un seuil.

19. Serveur dans un réseau cellulaire, comprenant :
- une interface réseau adaptée à se connecter à des noeuds dudit réseau cellulaire ;
- un contrôleur adapté à recevoir une demande d'un noeud dudit réseau cellulaire de l'adresse de Protocole Internet d'un noeud cible, ladite demande incluant une identification de la cellule desservie par ledit noeud, à déterminer l'adresse de Protocole Internet dudit noeud cible en utilisant ladite identification de cellule, et à émettre une réponse incluant ladite adresse de Protocole Internet jusqu'audit noeud demandeur ; et
- une base de données locale comprenant des associations entre des identifications de cellules et des adresses de Protocole Internet correspondantes,
dans lequel ledit contrôleur est adapté à exécuter ladite émission de ladite demande par une requête dans ladite base de données locale et à obtenir ladite réponse en récupérant ladite adresse de Protocole Internet dans ladite base de données locale dans le cas où ladite base de données locale contient une association correspondante, et dans lequel ledit contrôleur est adapté à recevoir une réponse incluant l'adresse de Protocole Internet dudit noeud cible, dans le cas où ladite base de données locale ne contient pas une association correspondante, et à stocker ladite adresse de Protocole Internet et ladite identification de cellule dudit noeud comme une nouvelle association dans ladite base de données locale.

20. Serveur selon la revendication 19, dans lequel ladite identification de cellule est incluse dans ladite demande sous la forme d'un domaine Internet conformément à la syntaxe du Système de Noms de Domaines.

21. Serveur selon la revendication 20, dans lequel ledit domaine Internet comprend un domaine de niveau supérieur et un domaine de deuxième niveau, et dans lequel
- ledit domaine de niveau supérieur est unique pour l'opérateur dudit réseau cellulaire, et ledit domaine de deuxième niveau est un identifiant unique pour ledit noeud dans ledit réseau cellulaire ;
ou
- ledit domaine de niveau supérieur est un domaine de niveau supérieur partagé par une pluralité de réseaux cellulaires, et ledit domaine de deuxième niveau est un identifiant unique pour ledit noeud dans ladite pluralité de réseaux cellulaires.

22. Serveur selon la revendication 21, dans lequel ledit contrôleur est adapté à évaluer le domaine de niveau supérieur de ladite identification de cellule, à exécuter lesdites demande dans et réception de ladite base de données locale dans le cas où ledit domaine de niveau supérieur correspond à un domaine de niveau supérieur prédéterminé, et à exécuter ledit envoi dans le cas où ledit domaine de niveau supérieur ne correspond pas audit domaine de niveau supérieur prédéterminé.
